# EUROPÄISCHE PATENTSCHRIFT

(11) **EP 1 428 847 B1**
(45) Veröffentlichungstag und Bekanntmachung des Hinweises auf die Patenterteilung: **02.02.2011**
(21) Anmeldenummer: 03025580.6
(22) Anmeldetag: 08.11.2003
(51) Int. Cl.: C08G 18/40, C08G 18/64, C08G 18/76

(54) **Verfahren zur Erniedrigung von Emissionen aus Polyurethanschaumstoffen**
Process for reducing emissions from polyurethane foams
Procédé pour réduire les émissions de mousses de polyurethane

(30) Priorität: 11.12.2002 DE 10258046
(43) Veröffentlichungstag der Anmeldung: 16.06.2004
(73) Patentinhaber: BASF SE, 67056 Ludwigshafen (DE)
(72) Erfinder: Templin, Markus, Dr., 49448 Lemförde (DE); Rodewald, Dieter, Dr., 67063 Ludwigshafen (DE); Tesch, Helmut, Dr., 49152 Bad Essen (DE); Merten, Anne-Kathrin, 01979 Lauchhammer (DE); Illguth, Rolf, 49356 Diepholz (DE); Scherr, Günter, Dr., 67065 Ludwigshafen (DE); Martin-Portugues, Marta, Dr., 67071 Ludwigshafen (DE); Kreyenschmidt, Martin, Dr., 49393 Lohne (DE)

(56) Entgegenhaltungen:
- EP-A- 0 902 039
- EP-A- 1 127 913
- DE-A- 10 003 156
- DE-A- 10 003 157

## Beschreibung

Die Erfindung betrifft ein Verfahren zur Erniedrigung von Formaldehydemission aus Polyurethanschaumstoffen durch Zugabe von Aminogruppen aufweisenden Polymeren zu dem Polyurethanschaumstoff, sowie Polyurethanschaumstoffe, enthaltend Aminogruppen aufweisende Polymere mit einem Molekulargewicht von mindestens 500 und einer Aminofunktionalität von mindestens 3, wobei das Verhältnis von Molekulargewicht zu Aminofunktionalität von 40 bis 500 beträgt, in einer Menge von 10⁻⁴ bis weniger als 0,1 Gew.-%, bezogen auf das Gesamtgewicht des Polyurethanschaumstoffs.

Es ist aus dem Stand der Technik bekannt, dass Polyurethanschaumstoffe Formaldehyd emittieren können, wobei diese Formaldehydemission im allgemeinen unerwünscht ist. Nachgewiesen werden diese Emissionen z.B. bei Messungen nach der VDA 275 (Flaschenmethode, 3 h 60°C) oder auch nach der VDA 276 (Bauteilkammerprüfung, 65°C). Diese Formaldehydemissionen können bereits bei frisch hergestellten Schaumstoffen auftreten und werden durch Alterungsprozesse, besonders Photooxidation, verstärkt.

DE 100 03 156 und DE 100 03 157 beschreiben Polyurethanschaumstoffe, die Ethylenimin, Polyethylenimine und Polyvinylamine enthalten, wobei diese Stoffe zur Adsorption von Schwermetallen und organischer Moleküle, wie beispielsweise Formaldehyd, aus dem umgebenden Medium verwendet werden.

Aufgabe der Erfindung war es nun, Polyurethanschaumstoffe herzustellen, die einen reduzierten Gehalt an Formaldehydemission aufweisen, bevorzugt im wesentlichen frei von Formaldehydemissionen sind. Eine Reduzierung des Formaldehydgehaltes insbesondere von Ausstattungsgegenständen ist interessant aus gesundheitlichen Gründen, um die Belastung von Personen besonders in Innenräumen mit Formaldehyd zu reduzieren. Im Unterschied zum vorstehend genannten Stand der Technik liegt die Aufgabe der Erfindung in der Reduzierung der Formaldehydemissionen aus dem PUR-Schaumstoff als solchen, und nicht in der Adsorption von Formaldehyd aus der Umgebungsluft.

Eine weitere Aufgabe der Erfindung war es, Polyurethanschaumstoffe bereit zu stellen, die auch unter photooxidativen Bedingungen einen reduzierten Gehalt an Formaldehydemission aufweisen, bevorzugt im wesentlichen frei von Formaldehydemissionen sind.

Eine weitere Aufgabe der Erfindung bestand darin, Polyurethan-Weich- und/oder Halbhartschaumstoffe bereit zu stellen, die verbesserte mechanische Eigenschaften aufweisen, bevorzugt bzgl. des Verhaltens beim Wet Compression Set (gemessen in Anlehnung an Renault Norm 1637 MOD2) und bei der Rückprallelastizität von weichelastischen Schäumen (DIN 53573).

Die Aufgabe der Erfindung, d.h. eine Reduzierung der Formaldehydemissionen von PUR-Schaumstoffen, konnte dadurch erreicht werden, dass Aminogruppen aufweisende Polymere zu Polyurethanschaumstoffen, bevorzugt in geringen Mengen, gegeben wurden, wobei die Zugabe vor, während oder nach der Herstellung des Polyurethanschaumstoffs erfolgen kann. In bevorzugten Ausführungsformen gelang es, die Formaldehydemissionen von PUR-Schäumen unter die Nachweisgrenze der eingesetzten Meßmethode zu senken.

Es zeigte sich darüber hinaus, dass durch die Zugabe von Aminogruppen aufweisenden Polymeren zu Polyurethanschaumstoffen, bevorzugt in geringen Mengen, auch die durch photooxidative Bedingungen im fertigen Schaum erzeugte Menge an emittiertem Formaldehyd reduziert werden kann.

Die Zugabe von geringen Mengen von Aminogruppen aufweisenden Polymeren zu Polyurethan-Weich- und/oder Halbhartschaumstoffen kann darüber hinaus zu einer Verbesserung des Wet Compression Sets und der Rückprallelastizität führen.

Gegenstand der Erfindung ist daher ein Verfahren zur Erniedrigung von Formaldehydemission aus Polyurethanschaumstoffen durch Zugabe von Aminogruppen aufweisenden Polymeren zu dem Polyurethanschaumstoff, wobei die Zugabe vor, während oder nach der Herstellung des Polyurethanschaumstoffs erfolgen kann.

Weiterhin ist Gegenstand der Erfindung ein Polyurethanschaumstoff, enthaltend Aminogruppen aufweisende Polymere mit einem Molekulargewicht von mindestens 500 und einer Aminofunktionalität von mindestens 3, wobei das Verhältnis von Molekulargewicht zu Aminofunktionalität von 40 bis 500 beträgt, in einer Menge von 10⁻⁴ bis weniger als 0,1 Gew.-%, bezogen auf das Gesamtgewicht des Polyurethanschaumstoffs.

Schließlich ist Gegenstand der Erfindung die Verwendung von Aminogruppen aufweisenden Polymeren zur Herstellung von Polyurethanschaumstoffen, die emissionsarm bezüglich Formaldehyd sind.

Gegenstand der Erfindung ist des weiteren die Verwendung von Aminogruppen aufweisenden Polymeren in Polyurethanschaumstoffen, insbesondere in PolyurethanWeich- und/oder Halbhartschaumstoffen, zur Verbesserung der mechanischen Eigenschaften, besonders Wet Compression Set (gemessen in Anlehnung an Renault Norm 1637 MOD2) und Rückprallelastizität (DIN 53573).

Unter Aminogruppen aufweisenden Polymeren werden im Rahmen dieser Erfindung alle polymeren Stoffe verstanden, die primäre und/oder sekundäre Aminogruppen aufweisen. Hierbei ist es bevorzugt, dass die primären oder sekundären Aminogruppen als Seitengruppe im Polymer angeordnet sind.

In einer bevorzugten Ausführungsform weisen die Aminogruppen aufweisenden Polymere ein zahlenmittleres Molekulargewicht von mindestens 500 g/mol, bevorzugt von mindestens 1.000 g/mol, mehr bevorzugt von mindestens 1.500 g/mol, besonders bevorzugt von mindestens 2.000 g/mol, insbesondere von mindestens 2.500 g/mol auf. Die Obergrenze des zahlenmittleren Molekulargewichts ist im allgemeinen nicht begrenzt, bevorzugt sollte sie nicht über 1.000.000 g/mol, besonders bevorzugt nicht über 750.000 g/mol liegen.

Die Aminogruppen aufweisenden Polymere weisen im allgemeinen eine Aminofunktionalität pro Polymermolekül von mindestens 3, bevorzugt von mindestens 5, mehr bevorzugt von mindestens 10, besonders bevorzugt von mindestens 20 und insbesondere von mindestens 50 auf. Die Obergrenze der Aminofunktionalität ist im allgemeinen nicht begrenzt, bevorzugt sollte sie nicht über 20.000, besonders bevorzugt nicht über 15.000, insbesondere nicht über 10.000 liegen.

In einer bevorzugten Ausführungsform weisen die Aminogruppen aufweisenden Polymere ein Verhältnis von Molekulargewicht zu Aminofunktionalität von 40 bis 500, mehr bevorzugt von 50 bis 300, besonders bevorzugt von 60 bis 250, insbesondere von 70 bis 200 auf.

Bevorzugt sind die Aminogruppen aufweisenden Polymere ausgewählt aus Vinylamineinheiten enthaltenden Polymeren, vernetzten Polyamidoaminen, mit Ethylenimin gepfropften vernetzten Polyamidoaminen, Polyethyleniminen, alkoxylierten Polyethyleniminen, vernetzten Polyethyleniminen, amidierten Polyethyleniminen, alkylierten Polyethyleniminen, Polyaminen, Amin-Epichlorhydrin-Polykondensaten, wasserlöslichen Polyadditionsprodukten aus multifunktionellen Epoxiden und multifunktionellen Aminen, alkoxylierten Polyaminen, Polyallylaminen, und Kondensaten von Lysin, Ornithin oder Arginin oder Gemischen daraus.

Zur Herstellung von Vinylamineinheiten enthaltenden Polymerisaten geht man beispielsweise von offenkettigen N-Vinylcarbonsäureamiden der Formel 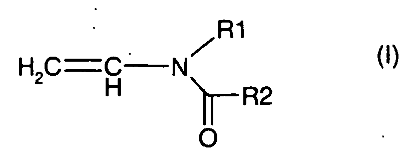 aus, in der R¹ und R² gleich oder verschieden sein können und für Wasserstoff und C₁- bis C₆-Alkyl stehen. Geeignete Monomere sind beispielsweise N-Vinylformamid (R¹=R²=H in Formel I) N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid. Zur Herstellung der Polymerisate können die genannten Monomeren entweder allein, in Mischung untereinander oder zusammen mit anderen monoethylenisch ungesättigten Monomeren polymerisiert werden. Vorzugsweise geht man von Homo- oder Copolymerisaten des N-Vinylformamids aus. Vinylamineinheiten enthaltende Polymerisate sind beispielsweise aus US-A-4 421 602, US-A-5 334 287, EP-A-0 216 387 und EP-A-0 251 182 bekannt. Sie werden durch Hydrolyse von Polymerisaten, die die Monomeren der Formel I einpolymerisiert enthalten, mit Säuren, Basen oder Enzymen erhalten.

Als monoethylenisch ungesättigte Monomere, die mit den N-Vinylcarbonsäureamiden copolymerisiert werden, kommen alle damit copolymerisierbaren Verbindungen in Betracht. Beispiele hierfür sind Vinylester von gesättigten Carbonsäuren von 1 bis 6 Kohlenstoffatomen wie Vinylformiat, Vinylacetat, Vinylpropionat und Vinylbutyrat und Vinylether wie C₁- bis C₆-Alkylvinylether, z.B. Methyl- oder Ethylvinylether. Weitere geeignete Comonomere sind ethylenisch ungesättigte C₃- bis C₆-Carbonsäuren, beispielsweise Acrylsäure, Methacrylsäure, Maleinsäure, Crotonsäure, Itaconsäure und Vinylessigsäure sowie deren Alkalimetall- und Erdalkalimetallsalze, Ester, Amide und Nitrile der genannten Carbonsäuren, beispielsweise Methylacrylat, Methylmethacrylat, Ethylacrylat und Ethylmethacrylat.

Weitere geeignete Carbonsäureester leiten sich von Glykolen oder bzw. Polyalkylenglykolen ab, wobei jeweils nur eine OH-Gruppe verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie Acrylsäuremonoester von Polyalkylenglykolen einer Molmasse von 500 bis 10000. Weitere geeignete Comonomere sind Ester von ethylenisch ungesättigten Carbonsäuren mit Aminoalkoholen wie beispielsweise Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Dimethylaminobutylacrylat und Diethylaminobutylacrylat. Die basischen Acrylate können in Form der freien Basen, der Salze mit Mineralsäuren wie Salzsäure, Schwefelsäure oder Salpetersäure, der Salze mit organischen Säuren wie Ameisensäure, Essigsäure, Propionsäure oder der Sulfonsäuren oder in quaternierter Form eingesetzt werden. Geeignete Quaternierungsmittel sind beispielsweise Dimethylsulfat, Diethylsulfat, Methylchlorid, Ethylchlorid oder Benzylchlorid.

Weitere geeignete Comonomere sind Amide ethylenisch ungesättigter Carbonsäuren wie Acrylamid, Methacrylamid sowie N-Alkylmono- und Diamide von monoethylenisch ungesättigten Carbonsäuren mit Alkylresten von 1 bis 6 C-Atomen, z.B. N-Methylacrylamid, N,N-Dimethylacrylamid, N-Methylmethacrylamid, N-Ethylacrylamid, N-Propylacrylamid und tert. Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

Weiterhin sind als Comonomere geeignet N-Vinylpyrrolidon, N-Vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol und N-Vinylimidazoline wie N-Vinylimidazolin, N-Vinyl-2-methylimidazolin und N-Vinyl-2-ethylimidazolin. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird. In Frage kommen auch Diallyldialkylammoniumhalogenide wie z.B. Diallyldimethylammoniumchloride.

Weiterhin sind als Comonomere einsetzbar Alkene, wie z.B. Ethen, Propen, Buten, Isobuten, Hexen und Butadien.

Außerdem kommen als Comonomere Sulfogruppen enthaltende Monomere wie beispielsweise Vinylsulfonsäure, Allylsulfonsäure, Methallylsulfonsäure, Styrolsulfonsäure, die Alkalimetalloder Ammoniumsalze dieser Säuren oder Acrylsäure-3-sulfopropylester in Frage, wobei der Gehalt der amphoteren Copolymerisate an kationischen Einheiten den Gehalt an anionischen Einheiten übertrifft, so daß die Polymeren insgesamt eine kationische Ladung haben.

Die Copolymerisate enthalten beispielsweise
- 99,99 bis 1 mol-%, vorzugsweise 99,9 bis 5 mol-% N-Vinylcarbonsäureamide der Formel I und
- 0,01 bis 99 mol-%, vorzugsweise 0,1 bis 95 mol-% andere, damit copolymerisierbare monoethylenisch ungesättigte Monomere
in einpolymerisierter Form.

Um Vinylamineinheiten enthaltende Polymerisate herzustellen, geht man vorzugsweise von Homopolymerisaten des N-Vinylformamids oder von Copolymerisaten aus, die durch Copolymerisieren von
- N-Vinylformamid mit
- Vinylformiat, Vinylacetat, Vinylpropionat, Acrylnitril, N-Vinylcaprolactam, N-Vinylharnstoff, Acrylsäure, N-Vinylpyrrolidon oder C₁- bis C₆-Alkylvinylethern
und anschließende Hydrolyse der Homo- oder der Copolymerisate unter Bildung von Vinylamineinheiten aus den einpolymerisierten N-Vinylformamideinheiten erhältlich sind, wobei der Hydrolysegrad z. B. 0,1 bis 100 mol-% beträgt.

Die Hydrolyse der oben beschriebenen Polymerisate erfolgt nach bekannten Verfahren durch Einwirkung von Säuren, Basen oder Enzymen. Hierbei entstehen aus den einpolymerisierten Monomeren der oben angegebenen Formel I durch Abspaltung der Gruppierung 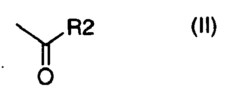 wobei R² die dafür in Formel I angegebene Bedeutung hat, Polymerisate, die Vinylamineinheiten der Formel 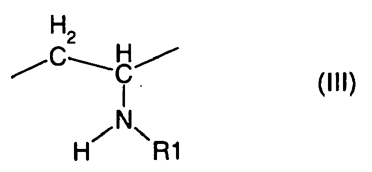 enthalten, in der R¹ die in Formel I angegebene Bedeutung hat. Bei Verwendung von Säuren als Hydrolysemittel liegen die Einheiten III als Ammoniumsalz vor.

Die Homopolymerisate der N-Vinylcarbonsäureamide der Formel I und ihre Copolymerisate können zu 0,1 bis 100, vorzugsweise 70 bis 100 mol-% hydrolysiert sein. In den meisten Fällen beträgt der Hydrolysegrad der Homo- und Copolymerisate 5 bis 95 mol-%. Der Hydrolysegrad der Homopolymerisate ist gleichbedeutend mit dem Gehalt der Polymerisate an Vinylamineinheiten. Bei Copolymerisaten, die Vinylester einpolymerisiert enthalten, kann neben der Hydrolyse der N-Vinylformamideinheiten eine Hydrolyse der Estergruppen unter Bildung von Vinylalkoholeinheiten eintreten. Dies ist insbesondere dann der Fall, wenn man die Hydrolyse der Copolymerisate in Gegenwart von Natronlauge durchführt. Einpolymerisiertes Acrylnitril wird ebenfalls bei der Hydrolyse chemisch verändert. Hierbei entstehen beispielsweise Amidgruppen oder Carboxylgruppen. Die Vinylamineinheiten enthaltenden Homo- und Copolymeren können gegebenenfalls bis zu 20 mol-% an Amidineinheiten enthalten, die z.B. durch Reaktion von Ameisensäure mit zwei benachbarten Aminogruppen oder durch intramolekulare Reaktion einer Aminogruppe mit einer benachbarten Amidgruppe z.B. von einpolymerisiertem N-Vinylformamid entsteht. Die Molmassen der Vinylamineinheiten enthaltenden Polymerisate betragen z.B. 500 bis 10 Millionen, vorzugsweise 1000 bis 5 Millionen (bestimmt durch Lichtstreuung). Dieser Molmassenbereich entspricht beispielsweise K-Werten von 5 bis 300, vorzugsweise 10 bis 250 (bestimmt nach H. Fikentscher in 5 %iger wässriger Kochsalzlösung bei 25°C und einer Polymerkonzentration von 0,5 Gew.-%.

Die Vinylamineinheiten enthaltenden Polymeren werden vorzugsweise in salzfreier Form eingesetzt. Salzfreie wäßrige Lösungen von Vinylamineinheiten enthaltenden Polymerisaten können beispielsweise aus den oben beschriebenen salzhaltigen Polymerlösungen mit Hilfe einer Ultrafiltration an geeigneten Membranen bei Trenngrenzen von beispielsweise 1000 bis 500 000 Dalton, vorzugsweise 10 000 bis 300 000 Dalton hergestellt werden. Auch die unten beschriebenen wäßrigen Lösungen von Amino- und/oder Ammoniumgruppen enthaltenden anderen Polymeren können mit Hilfe einer Ultrafiltration in salzfreier Form gewonnen werden.

Polyethylenimine werden beispielsweise durch Polymerisation von Ethylenimin in wässriger Lösung in Gegenwart von säureabspaltenden Verbindungen, Säuren oder Lewis-Säuren als Katalysator hergestellt. Polyethylenimine haben beispielsweise Molmassen bis zu 2 Millionen, vorzugsweise von 200 bis 1.000 000. Besonders bevorzugt werden Polyethylenimine mit Molmassen von 500 bis 750 000 eingesetzt. Außerdem eignen sich wasserlösliche vernetzte Polyethylenimine, die durch Reaktion von Polyethyleniminen mit Vernetzern wie Epichlorhydrin oder Bischlorhydrinethern von Polyalkylenglykolen mit 2 bis 100 Ethylenoxid- und/oder Propylenoxid-Einheiten erhältlich sind und noch über freie primäre und/oder sekundäre Aminogruppen verfügen. Auch amidische Polyethylenimine sind geeignet, die beispielsweise durch Amidierung von Polyethyleniminen mit C₁- bis C₂₂-Monocarbonsäuren erhältlich sind. Weitere geeignete kationische Polymere sind alkylierte Polyethylenimine und alkoxylierte Polyethylenimine. Bei der Alkoxylierung verwendet man z.B. pro NH-Einheit in Polyethylenimin 1 bis 5 Ethylenoxid- bzw. Propylenoxideinheiten.

Geeignete primäre und/oder sekundäre Amino- und/oder Ammoniumgruppen enthaltende Polymere sind außerdem Polyamidoamine, die beispielsweise durch Kondensieren von Dicarbonsäuren mit Polyaminen erhältlich sind. Geeignete Polyamidoamine erhält man beispielsweise dadurch, daß man Dicarbonsäuren mit 4 bis 10 Kohlenstoffatomen mit Polyalkylenpolyaminen umsetzt, die 3 bis 10 basische Stickstoffatome im Molekül enthalten. Geeignete Dicarbonsäuren sind beispielsweise Bernsteinsäure, Maleinsäure, Adipinsäure, Glutarsäure, Korksäure, Sebacinsäure oder Terephthalsäure. Bei der Herstellung der Polyamidoamine kann man auch Mischungen von Dicarbonsäuren einsetzen, ebenso Mischungen aus mehreren Polyalkylenpolyaminen. Geeignete Polyalkylenpolyamine sind beispielsweise Diethylentriamin, Triethylentetramin, Tetraethylenpentamin, Dipropylentriamin, Tripropylentetramin, Dihexamethylentriamin, A-minopropylethylendiamin und Bis-aminopropylethylendiamin. Die Dicarbonsäuren und Polyalkylenpolyamine werden zur Herstellung der Polyamidoamine auf höhere Temperaturen erhitzt, z.B. auf Temperaturen in dem Bereich von 120 bis 220, vorzugsweise 130 bis 180°C. Das bei der Kondensation entstehende Wasser wird aus dem System entfernt. Bei der Kondensation kann man gegebenenfalls auch Lactone oder Lactame von Carbonsäuren mit 4 bis 8 C-Atomen einsetzen. Pro Mol einer Dicarbonsäure verwendet man beispielsweise 0,8 bis 1,4 Mol eines Polyalkylenpolyamins.

Weitere Aminogruppen enthaltende Polymere sind mit Ethylenimin gepfropfte Polyamidoamine. Sie sind aus den oben beschriebenen Polyamidoaminen durch Umsetzung mit Ethylenimin in Gegenwart von Säuren oder Lewis-Säuren wie Schwefelsäure oder Bortrifluoridetheraten bei Temperaturen von beispielsweise 80 bis 100°C erhältlich. Verbindungen dieser Art werden beispielsweise in der DE-B-24 34 816 beschrieben.

Auch die gegebenenfalls vernetzten Polyamidoamine, die gegebenenfalls noch zusätzlich vor der Vernetzung mit Ethylenimin gepfropft sind, kommen als kationische Polymere in Betracht. Die vernetzten, mit Ethylenimin gepfropften Polyamidoamine sind wasserlöslich und haben z.B. ein mittleres Molgewicht von 3000 bis 2 Million Dalton. Übliche Vernetzer sind z.B. Epichlorhydrin oder Bischlorhydrinether von Alkylenglykolen und Polyalkylenglykolen.

Als Polymere, die primäre und/oder sekundäre Amino- und/oder Ammoniumgruppen aufweisen, kommen auch Polyallylamine in Betracht. Polymerisate dieser Art werden erhalten durch Homopolymerisation von Allylamin, vorzugsweise in mit Säuren neutralisierter Form oder durch Copolymerisieren von Allylamin mit anderen monoethylenisch ungesättigten Monomeren, die oben als Comonomere für N-Vinylcarbonsäureamide beschrieben sind.

In einer besonders bevorzugten Ausführungsform wird als Aminogruppen aufweisendes Polymer Polyvinylamin verwendet. Bevorzugt weist das verwendete Polyvinylamin ein zahlenmittleres Molekulargewicht von 500 bis 1.000.000 g/mol auf und ein Verhältnis von zahlenmittlerem Molekulargewicht zu Aminofunktionalität von 40 bis 500.

Im erfindungsgemäßen Verfahren werden im allgemeinen die Aminogruppen aufweisenden Polymere in einer Menge zu dem Polyurethanschaumstoff gegeben, die ausreichend ist, um die Formaldehydemission um das gewünschte Maß zu reduzieren. Im allgemeinen ist eine geringe Menge an Aminogruppen aufweisenden Polymer nötig.

In einer bevorzugten Ausführungsform wird das Aminogruppen aufweisende Polymer in einer Menge von 0,001 bis weniger als 0,1 Gew.-%, insbesondere von 0,005 bis 0,05, bezogen auf das Gesamtgewicht des Polyurethanschaumstoffs, zu dem Polyurethanschaumstoff gegeben.

Polyurethanschaumstoffe sind im allgemeinen erhältlich durch Umsetzung von
a) Polyisocyanaten mit
b) Verbindungen mit gegenüber Isocyanaten reaktiven Wasserstoffatomen, gegebenenfalls in Gegenwart von c) Katalysatoren, d) Treibmitteln und/oder e) Zusatzstoffen.

Als Isocyanate (a) können allgemein bekannte (cyclo)aliphatische und/oder insbesondere aromatische Polyisocyanate eingesetzt werden. Zur Herstellung der erfindungsgemäßen Verbundelemente eignen sich besonders aromatische Diisocyanate, vorzugsweise Diphenylmethandiisocyanat (MDI) und Toluylendiisocyanat (TDI). Die Isocyanate können in Form der reinen Verbindung oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Als Verbindungen mit gegenüber Isocyanaten reaktiven Wasserstoffatomen (b) kommen Verbindungen in Frage, die zwei oder mehr reaktive Gruppen, ausgewählt aus OH-Gruppen, SH-Gruppen und CH-aciden Gruppen, wie z.B. β-Diketo-Gruppen, im Molekül tragen.

Zweckmäßigerweise werden als Komponente (b) Verbindungen mit einer Funktionalität von 1,8 bis 8, vorzugsweise 2 bis 6, und einem Molekulargewicht von 300 bis 8000, vorzugsweise von 400 bis 6000 verwendet. Bewährt haben sich z.B. vorzugsweise Polyole, ausgewählt aus der Gruppe der Polyether-polyole, Polyester-polyole, Polythioetherpolyole, hydroxylgruppenhaltigen Polyacetale und hydroxylgruppenhaltigen aliphatischen Polycarbonate oder Mischungen aus mindestens zwei der genannten Polyole.

Vorzugsweise Anwendung finden Polyester-polyole und/oder Polyether-polyole. Besonders bevorzugt werden Polyetherpolyole eingesetzt, insbesondere solche, die mindestens 10 % primäre Hydroxylgruppen aufweisen. Die Hydroxylzahl der Polyhydroxylverbindungen beträgt dabei in aller Regel 50 bis 1000. Des weiteren können die Verbindungen (b) in Mischung mit üblichen Kettenverlängerungs- und/oder Vernetzungsmitteln verwendet werden.

Als Polyetherole (b) können sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an mindestens difunktionelle Alkohole in Gegenwart von sogenannten Doppelmetallcyanidkatalysatoren hergestellt.

Als Katalysatoren (c) können übliche Verbindungen eingesetzt werden, die beispielsweise die Reaktion der Komponente (a) mit der Komponente (b) stark beschleunigen. In Frage kommen beispielsweise tertiäre Amine und/oder organische Metallverbindungen, insbesondere Zinnverbindungen. Katalysatoren werden im allgemeinen in einer Menge von 0,1 bis 5 Gew.% bezogen auf das Gewicht der Komponente b) eingesetzt.

Als Treibmittel (d) können zur Herstellung von geschäumten Produkten allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind inerte (cyclo)aliphatische Kohlenwasserstoffe mit 4 bis 8 Kohlenstoffatomen, die unter den Bedingungen der Polyurethanbildung verdampfen. Die Menge der eingesetzten Treibmittel richtet sich nach der angestrebten Dichte der Schaumstoffe.

Die Umsetzung erfolgt gegebenenfalls in Anwesenheit von (e) Hilfs- und/oder Zusatzstoffen, wie z.B. Zellreglern, Trennmitteln, Pigmenten, Verstärkungsstoffen wie Glasfasern, oberflächenaktiven Verbindungen und/oder Stabilisatoren gegen oxidativen, thermischen, hydrolytischen oder mikrobiellen Abbau oder Alterung.

Im allgemeinen wird die Komponente (a) als Isocyanatkomponente und die Komponente (b), gegebenenfalls im Gemisch mit den Komponenten (c) bis (e) als Polyolkomponente bezeichnet.

Zur Herstellung von Polyurethanschaumstoffen werden im allgemeinen die Komponenten (a), (b) und gegebenenfalls (c) und (e) in solchen Mengen zur Umsetzung gebracht, dass das Äquivalenzverhältnis von NCO-Gruppen zur Summe der reaktiven Wasserstoffatome 1:0.8 bis 1:1.25, vorzugsweise 1:0.9 bis 1:1.15 beträgt. Ein Verhältnis von 1:1 entspricht hierbei einem NCO-Index von 100.

Im erfindungsgemäßen Verfahren es kann die Zugabe der Aminogruppen aufweisenden Polymere zu dem Polyurethanschaumstoff durch verschiedene Vorgehensweisen erfolgen.

Zum einen kann die Zugabe des Aminogruppen aufweisenden Polymers vor und/oder während der Herstellung des Polyurethanschaumstoffes erfolgen.

Hierzu wird entweder der Isocyanatkomponente oder der Polyolkomponente, bevorzugt der Polyolkomponente, das Aminogruppen aufweisende Polymer zugesetzt und anschließend mit der anderen Komponente zur Reaktion gebracht. Die Zugabe kann dabei sowohl vor dem Mischen von Polyolkomponente und Isocyanatkomponente erfolgen als auch direkt beim Vermischen der Komponenten selber. Die Zugabe erfolgt in den vorstehend beschriebenen Mengen. Dabei kann das Aminogruppen aufweisende Polymer in Reinform zugegeben werden oder es wird vorher in einem Lösungsmittel aufgenommen und dann zur Isocyanatkomponente oder der Polyolkomponente gegeben. Ein bevorzugtes Lösungsmittel für das Aminogruppen aufweisende Polymer ist Wasser.

Eine andere Möglichkeit im erfindungsgemäßen Verfahren stellt die Zugabe des Aminogruppen aufweisenden Polymers zu dem fertigen Polyurethanschaumstoff, der durch Umsetzung der vorstehend beschriebenen Komponenten (a) und (b) und gegebenenfalls (c) bis (e) hergestellt wurde, dar. Diese Zugabe erfolgt im allgemeinen durch Aufbringen einer Lösung oder Dispersion, welche das Polymer enthält. Das Aufbringen kann beispielsweise durch Eintauchen eines Polyurethanschaumstoffes in eine Flüssigkeit erfolgen, die ein primäre und/oder sekundäre Aminogruppen enthaltendes Polymer in gelöster oder in dispergierter Form enthält. Alternativ kann die Flüssigkeit mit dem gelösten oder dem dispergierten polymeren Behandlungsmittel auch durch Aufsprühen auf die Schaumstoffoberfläche appliziert werden. Danach wird das Lösemittel aus dem so behandelten Schaumstoffkörper entfernt, z.B. durch Trocknen des Schaumstoffs.

Die Formaldehyd-Emission der nach dem erfindungsgemäßen Verfahren hergestellten Polyurethanschaumstoffe beträgt nach der Norm VDA 275 weniger als 0,8, bevorzugt weniger als 0,5, besonders bevorzugt weniger als 0,1 mg Formaldehyd pro kg Polyurethanschaumstoff. Übliche, aus dem Stand der Technik bekannte Polyurethanschaumstoffe weisen unter oben genannten Messbedingungen etwa eine Formaldehydemission von circa 1 mg Formaldehyd pro kg Polyurethanschaumstoff auf.

Das erfindungsgemäße Verfahren ist auch zur Erniedrigung von Formaldehydemissionen aus Polyurethanschaumstoffen unter photooxidativen Bedingungen geeignet.

Nach photooxidativer Alterung beträgt die Formaldehyd-Emission der nach dem erfindungsgemäßen Verfahren hergestellten Polyurethanschaumstoffe nach der Norm VDA 275 weniger als 2,5, bevorzugt weniger als 1,5, besonders bevorzugt weniger als 0,5 mg Formaldehyd pro kg Polyurethanschaumstoff. Übliche, aus dem Stand der Technik bekannte Polyurethanschaumstoffe weisen unter oben genannten photooxidativen Messbedingungen etwa eine Formaldehydemission von circa 3,5 mg Formaldehyd pro kg Polyurethanschaumstoff auf.

Neben der Verringerung von Emissionen betrifft die Erfindung des weiteren die Verwendung von Aminogruppen aufweisenden Polymeren in Polyurethanschaumstoffen, insbesondere in PolyurethanWeich- und/oder Halbhartschaumstoffen, zur Verbesserung der mechanischen Eigenschaften, besonders Wet Compression Set (gemessen in Anlehnung an Renault Norm 1637 MOD2) und Rückprallelastizität (DIN 53573).

In einer bevorzugten Ausführungsform handelt es sich bei den Polyurethanschaumstoffen mit verbessertem Wet Compression Set um Polyurethanschaumstoffe mit einem Wet Compression Set von 1 bis 32 %.

In einer bevorzugten Ausführungsform handelt es sich bei den Polyurethanschaumstoffen mit verbesserter Rückprallelastizität um Polyurethanschaumstoffe mit einer Rückprallelastizität 62 bis 70 %.

Besonders bevorzugt sind Polyurethanschaumstoffe, wobei beide der vorstehend genannten Werte für Wet Compression Set und Rückprallelastizität erfüllt sind.

Das erfindungsgemäße Verfahren zur Erniedrigung von Formaldehydemission aus Polyurethanschaumstoffen und die erfindungsgemäßen Polyurethanschaumstoffe mit geringer Formaldehydemission finden im allgemeinen bei Ausstattungsgegenständen in Innenräumen Verwendung, da es aus gesundheitlichen Gründen vorteilhaft ist, die Belastung von Personen besonders in Innenräumen mit Formaldehyd zu reduzieren. Bevorzugt erfolgt daher eine Verwendung des erfindungsgemäßen Verfahrens und der erfindungsgemäßen Polyurethanschaumstoffe bei der Herstellung von Verkehrsmittel-Inneneinrichtungen, beispielsweise bei der Inneneinrichtung von Automobilen, Flugzeugen oder Zügen, oder bei der Herstellung von Weichschaumstoffen, beispielsweise von Blockweichschäumen oder Formweichschäumen, beispielsweise zur Herstellung von Matratzen.

Die Erfindung umfasst somit Ausstattungsgegenstände, enthaltend die erfindungsgemäßen Polyurethanschaumstoffe. Beispiele für Ausstattungsgegenstände sind unter anderem Verkehrsmittelinneneinrichtungen wie Armaturentafeln, Seitenverkleidungen, Dachhimmel, Hutablagen, Autoteppichhinterschäumungen, Autositze, Lenkräder und/oder Armauflagen und Weichschaumstoffe wie Matratzen, Kissen oder Polster.

### Die entsprechenden Bauteile sind bevorzugt aus folgenden PUR-Schaumstoffen aufgebaut:

Armaturentafeln, Seitenverkleidungen, Armauflagen auf Basis eines halbharten Polyurethanschaumstoffes mit einer Druckfestigkeit von mehr als 15 bis weniger als 80 kPa gemäß DIN 53421.
Autositze, Autoteppichhinterschäumungen und Matzratzen auf Basis eines Polyurethanweichschaumstoffes mit einer Druckfestigkeit von 15 kPa oder weniger gemäß DIN 53421. Lenkräder, auf Basis von Polyurethanweichintegralschaumstoffen.

Die vorliegende Erfindung soll durch nachfolgende Beispiele veranschaulicht werden.

### Ausgangsmaterialien:

- Lupranol® 2047:: Zellöffner-Polyetherol mit OH-Zahl 42
- Lupranol® 2090:: Reaktives Polyetherol mit OH-Zahl 28
- Lupranol® 2046:: Polyetherol mit OH-Zahl 30 für Kaltformschaumstoffe
- Lupranol® 2095:: Reaktives Polyetherol mit OH-Zahl 35
- Lupranol® 4895:: Polymerpolyol mit OH-Zahl 20 und einem Feststoffgehalt von 45%
- Lupranat® M 10R:: Polymer-MDI mit NCO-Gehalt 31,4
- Lupranat® M 20W:: Polymer-MDI mit NCO-Gehalt 31,2
- Lupranat® ME:: 4,4'-MDI
- Lupranat® MI:: Gemisch aus 2,4'- und 4,4'-MDI mit NCO-Gehalt von 33,2
- Lupragen® API:: N(3-Aminopropyl)imidazol
- Lupragen® VP9600/2:: Vernetzer mit OH-Zahl 650
- DABCO® 33LV:: 33% Triethylendiamin in Dipropylenglykol
- DABCO® BL 11:: 70% Bis(dimethylaminoethyl)ether in Dipropylenglykol
- Kosmos® 29:: Zinndioktoat
- Tegostab® B 8631:: Stabilisator
- Tegostab® B 4380:: Stabilisator
- Jeffcat® ZF10:: N,N,N'-Trimethyl-N'-hydroxyethyl-bisaminoethylether
- Jeffcat® ZR50:: N,N-Bis-(3-dimethylaminopropyl-)N-isopropanolamin
- Jeffcat® ZR70:: N,N-Dimethylaminoethoxyethanol

### Vergleichsbeispiel 1:

Zur Herstellung eines Polyurethan-Weichschaums wurden eine Polyolkomponente aus 97 Gew.-Teilen Lupranol® 2090, 3 Gew.-Teilen Lupranol® 2047 (Elastogran GmbH), 3,31 Gew.-Teilen Wasser, 0,8 Gew.-Teilen Lupragen® API (BASF AG), 0,6 Gew.-Teilen Jeffcat® ZR 70 (Fa. Huntsman) und 0,5 Gew.-Teilen Tegostab® B 8631 (Fa. Goldschmidt) mit einer Isocyanatkomponente bestehend aus 42 Gew.-Teilen Lupranat® M 20 W, 47 Gew.-Teilen Lupranat® MI und 11 Gew.-Teilen Lupranat® ME (Elastogran GmbH) bei einem Index von 0,9 vermischt und das aufschäumende Gemisch in eine auf 53 °C temperierte Aluminiumform mit den Maßen 40 cm x 40 cm x 10 cm gegeben und ein Kissen der Dichte 55 kg/m³ erhalten.

Bei Messung des Formaldehydgehalts nach der Flaschenmethode (VDA 275) ergibt sich am frischen Schaum ein Formaldehydgehalt von 1,3 ppm.

### Erfindungsgemäßes Beispiel 2:

Vorgehen wie im Vergleichsbeispiel 1 beschrieben. Zusätzlich werden zur Polyolkomponente 0,5 Teile einer 8,5 %igen wässrigen Polyvinylaminlösung gegeben.

Bei Messung des Formaldehydgehalts nach der Flaschenmethode (VDA 275) ergibt sich am frischen Schaum ein Formaldehydgehalt von kleiner 0,1 ppm (Nachweisgrenze der Messung).

### Vergleichsbeispiel 3:

Zur Herstellung eines Polyurethan-Halbhartschaums wurden eine Polyolkomponente aus 46 Gew.-Teilen Lupranol® 2090 (Elastogran GmbH), 45 Gew.-Teilen Lupranol® 2095 (Elastogran GmbH), 2 Gew.-Teilen 1,4-Butandiol, 0,5 Gew.-Teilen Triethanolamin, 3 Teilen eines linearen Polyesters (auf Basis Adipinsäure, Ethylenglykol, Butandiol und Lupranat® M10R, OH-Zahl: 34), 0,3 Teilen eines Dimethylaminpropylamin gestarteten Polyproyplenglykols (OH-Zahl: 250), 0,5 Teilen eines Emulgators (auf Basis eines mit Lupranol® 2046 und einem Polyethylenoxid-Derivat modifizierten Blockpolymeren aus Maleinsäureanhydrid und einem α-Olefin), 0,7 Gew.-Teilen Jeffcat® ZR50 (Fa. Huntsman), 0,05 Teilen Tegostab® B 8680 (Fa. Goldschmidt) und 2 Teilen Wasser mit einer Isocyanatkomponente bestehend aus einem Prepolymer (NCO-Gehalt: 28%) aus Lupranat® MI, Lupranat® ME, Lupranat® M 20 W und Lupranol® 2047 (Elastrogan GmbH) bei einem index von 0,96 vermischt und das aufschäumende Gemisch in eine auf 44°C temperierte Aluminiumform mit den Maßen 20 cm x 20 cm x 4 cm gegeben und ein Kissen mit der Dichte 100 kg/m³ erhalten.

Bei Messung des Formaldehydgehalts nach der Flaschenmethode (VDA 275) ergibt sich am frischen Schaum ein Formaldehydgehalt von 1,7 ppm. Lagerung des Schaums im Tageslicht in einer geschlossenen Flasche für 26 Tage führt zu einem Formaldehydgehalt von 14,4 ppm.

### Erfindungsgemäßes Beispiel 4:

Vorgehen wie im Vergleichsbeispiel 3 beschrieben. Zusätzlich werden zur Polyolkomponente 0,5 Teile einer 8,5 %igen wässrigen Polyvinylaminlösung gegeben.

Bei Messung des Formaldehydgehalts nach der Flaschenmethode (VDA 275) ergibt sich am frischen Schaum ein Formaldehydgehalt von kleiner 0,1 ppm (Nachweisgrenze der Messung). Lagerung des Schaums im Tageslicht in einer geschlossenen Flasche für 26 Tage führt zu einem Formaldehydgehalt von 2,0 ppm.

### Erfindungsgemäßes Beispiel 5:

Vorgehen wie im Vergleichsbeispiel 3 beschrieben. Zusätzlich werden zur Polyolkomponente 0,3 Teile einer 50 %igen wässrigen Polyethyleniminlösung gegeben.

Bei der Messung des Formaldehydgehalts nach der Flaschenmethode (VDA 275) ergibt sich am frischen Schaum ein Formaldehydgehalt von kleiner 0,1 ppm (Nachweisgrenze der Messung).

### Vergleichsbeispiel 6:

Zur Herstellung eines Polyurethan-Weichschaums wurden eine Polyolkomponente aus 22 Gew.-Teilen Lupranol® 4895(Elastogran GmbH), 78 Gew.-Teilen Lupranol® 2090, 1,4 Gew.-Teilen Diethanolamin (80%ig in Wasser), 1,5 Gew.-Teilen Lupragen® VP 9600/2(Elastogran GmbH), 2,1 Gew.-Teilen Wasser, 0,18 Gew.-Teilen DABCO® 33LV (Air Products), 0,06 Gew.-Teilen DABCO® BL 11 (Air Products), 1 Gew.-Teil Tegostab B 4380 (Fa. Goldschmidt) und 0,16 Gew.-Teilen Kosmos® 29 (Fa. Goldschmidt) mit einer Isocyanatkomponente bestehend aus 100 Gew.-Teilen Lupranat® T80 (Elastogran GmbH) bei einem Index von 1,05 vermischt und das aufschäumende Gemisch in eine offene, mit Kunststofffolie ausgekleidete Metallform mit einem Volumen von 40 Litern gegeben und ein Kissen der Dichte 34 kg/m³ erhalten.

Das Kissen wies einen Wet Compression Set (gemessen in Anlehnung an Renault Norm 1637 MOD2) von 47,4 % und eine Rückprallelastizität (nach DIN 53573) von 61 % auf.

### Erfindungsgemäßes Beispiel 7:

Vorgehen wie im Vergleichsbeispiel 6 beschrieben. Zusätzlich wurden zu der Polyolkomponente ..
0,3 Gew.-Teile einer 12%igen wässrigen Polyvinylaminlösung gegeben. Das Kissen wies einen Wet Compression Set (gemessen in Anlehnung an Renault Norm 1637 MOD2) von 29,5 % und eine Rückprallelastizität (nach DIN 53573) von 67 % auf.

## Patentansprüche

1. Verfahren zur Erniedrigung von Formaldehydemission aus Polyurethanschaumstoffen durch Zugabe von polymeren Stoffen mit primären und/oder sekundären Aminogruppen zu dem Polyurethanschaumstoff in einer Menge von 10⁻⁴ bis weniger als 0,1 Gew.-%, bezogen auf das Gesamtgewicht des Polyurethanschaumstoffs, wobei die Zugabe vor, während oder nach der Herstellung des Polyurethanschaumstoffs erfolgen kann.

2. Verfahren nach Anspruch 1, **dadurch gekennzeichnet, dass** das Aminogruppen aufweisende Polymer ein Molekulargewicht von mindestens 500 und eine Aminofunktionalität von mindestens 3 aufweist.

3. Verfahren nach Anspruch 1 oder 2, **dadurch gekennzeichnet, dass** das Aminogruppen aufweisende Polymer ein Verhältnis von Molekulargewicht zu Aminofunktionalität von 40 bis 500 aufweist.

4. Verfahren nach einem der Ansprüche 1 bis 3, **dadurch gekennzeichnet, dass** es sich bei dem Aminogruppen aufweisenden Polymer um Polyvinylamin handelt.

5. Verfahren nach einem der Ansprüche 1 bis 4, **dadurch gekennzeichnet, dass** die Erniedrigung von Formaldehydemission unter photooxidativen Bedingungen erzielt wird.

6. Verfahren nach einem der Ansprüche 1 bis 5, **dadurch gekennzeichnet, dass** der Polyurethanschaumstoff durch Umsetzung einer Polyisocyanatkomponente mit einer Polyolkomponente hergestellt wird, wobei das Aminogruppen aufweisende Polymer der Polyolkomponente zugesetzt wird.

7. Polyurethanschaumstoff, enthaltend polymere Stoffe mit primären und/oder sekundären Aminogruppen mit einem Molekulargewicht von mindestens 500 und einer Aminofunktionalität von mindestens 3, wobei das Verhältnis von Molekulargewicht zu Aminofunktionalität von 40 bis 500 beträgt, in einer Menge von 10⁻⁴ bis weniger als 0,1 Gew.-%, bezogen auf das Gesamtgewicht des Polyurethanschaumstoffs.

8. Ausstattungsgegenstand, enthaltend einen Polyurethanschaumstoff gemäß Anspruch 7.

9. Verwendung von polymeren Stoffen mit primären und/oder sekundären Aminogruppen zur Herstellung von Polyurethanschaumstoffen, die emissionsarm bezüglich Formaldehyd sind.

10. Verwendung von polymeren Stoffen mit primären und/oder sekundären Aminogruppen in einer Menge von 10⁻⁴ bis weniger als 0,1 Gew.-%, bezogen auf das Gesamtgewicht des Polyurethanschaumstoffs in Polyurethanschaumstoffen, zur Verbesserung der mechanischen Eigenschaften, besonders Wet Compression Set (gemessen in Anlehnung an Renault Norm 1637 MOD2) und Rückprallelastizität (DIN 53573).

## Claims

1. A process for reducing formaldehyde emission from polyurethane foams by adding polymeric substances having primary and/or secondary amino groups to the polyurethane foam in an amount of from 10⁻⁴ to less than 0.1% by weight, based on the total weight of the polyurethane foam, it being possible to effect the addition before, during or after the preparation of the polyurethane foam.

2. The process according to claim 1, wherein the amino-containing polymer has a molecular weight of at least 500 and an amino functionality of at least 3.

3. The process according to claim 1 or 2, wherein the amino-containing polymer has a ratio of molecular weight to amino functionality of from 40 to 500.

4. The process according to any of claims 1 to 3, wherein the amino-containing polymer is polyvinylamine.

5. The process according to any of claims 1 to 4, wherein the reduction of formaldehyde emission is achieved under photooxidative conditions.

6. The process according to any of claims 1 to 5, wherein the polyurethane foam is prepared by reacting a polyisocyanate component with a polyol component, the amino-containing polymer being added to the polyol component.

7. A polyurethane foam, comprising polymeric substances having primary and/or secondary amino groups and having a molecular weight of at least 500 and an amino functionality of at least 3, the ratio of molecular weight to amino functionality being from 40 to 500, in an amount of from 10⁻⁴ to less than 0.1% by weight, based on the total weight of the polyurethane foam.

8. An article of equipment, comprising a polyurethane foam according to claim 7.

9. The use of polymeric substances having primary and/or secondary amino groups for the preparation of polyurethane foams which have a low formaldehyde emission.

10. The use of polymeric substances having primary and/or secondary amino groups in an amount of from 10⁻⁴ to less than 0.1 % by weight, based on the total weight of the polyurethane foam, in polyurethane foams for improving the mechanical properties, in particular the wet compression set (measured on the basis of Renault standard 1637 MOD2) and resilience (DIN 53573).

## Revendications

1. Procédé pour la réduction de l'émission de formaldéhyde à partir de mousses de polyuréthanne, par addition à la mousse de polyuréthanne de substances polymères à groupes amino primaires et/ou secondaires, en une quantité de 10⁻⁴ à moins de 0,1 % en poids, par rapport au poids total de la mousse de polyuréthanne, l'addition pouvant s'effectuer avant, pendant ou après la production de la mousse de polyuréthanne.

2. Procédé selon la revendication 1, **caractérisé en ce que** le polymère comportant des groupes amino présente une masse moléculaire d'au moins 500 et une fonctionnalité amino d'au moins 3.

3. Procédé selon la revendication 1 ou 2, **caractérisé en ce que** le polymère comportant des groupes amino présente un rapport de la masse moléculaire à la fonctionnalité amino de 40 à 500.

4. Procédé selon l'une quelconque des revendications 1 à 3, **caractérisé en ce que** le polymère comportant des groupes amino consiste en polyvinylamine.

5. Procédé selon l'une quelconque des revendications 1 à 4, **caractérisé en ce que** la réduction de l'émission de formaldéhyde est réalisée dans des conditions photo-oxydantes.

6. Procédé selon l'une quelconque des revendications 1 à 5, **caractérisé en ce que** la mousse de polyuréthanne est produite par mise en réaction d'un composant polyisocyanate avec un composant polyol, le polymère comportant des groupes amino étant ajouté au composant polyol.

7. Mousse de polyuréthanne, contenant des substances polymères à groupes amino primaires et/ou secondaires, ayant une masse moléculaire d'au moins 500 et une fonctionnalité amino d'au moins 3, le rapport de la masse moléculaire à la fonctionnalité amino valant de 40 à 500, en une quantité de 10⁻⁴ à moins de 0,1 % en poids, par rapport au poids total de la mousse de polyuréthanne.

8. Article d'équipement, contenant une mousse de polyuréthanne selon la revendication 7.

9. Utilisation de substances polymères à groupes amino primaires et/ou secondaires pour la production de mousses de polyuréthanne qui sont à faible émission de formaldéhyde.

10. Utilisation de substances polymères à groupes amino primaires et/ou secondaires, en une quantité de 10⁻⁴ à moins de 0,1 % en poids, par rapport au poids total de la mousse de polyuréthanne, dans des mousses de polyuréthanne, pour l'amélioration des propriétés mécaniques, en particulier la déformation rémanente après compression à l'état humide *Wet Compression Set* (mesurée sur la base de la norme Renault 1637 MOD2) et l'élasticité de rebondissement (DIN 53573).
